# EUROPÄISCHE PATENTSCHRIFT

(11) **EP 1 112 798 B1**
(45) Veröffentlichungstag und Bekanntmachung des Hinweises auf die Patenterteilung: **14.04.2004**
(21) Anmeldenummer: 00126544.6
(22) Anmeldetag: 11.12.2000
(51) Int. Cl.: B23F 21/03, B24D 5/06, B24B 33/08

(54) **Feinbearbeitungswerkzeug zum Bearbeiten von zahnradförmigen Werkstücken**
Precision machining tool for finishing gear shaped workpieces
Outil pour l'usinage de précision pour le finissage de pièces sous forme de roue dentée

(30) Priorität: 29.12.1999 DE 29922958 U
(43) Veröffentlichungstag der Anmeldung: 04.07.2001
(73) Patentinhaber: The Gleason Works, Rochester, New York 14607-1282 (US)
(72) Erfinder: Reichert, Gerhard, 82216 Maisach (DE)
(74) Vertreter: Stahl, Gerhard F.W.

(56) Entgegenhaltungen:
- EP-A- 0 692 342
- DE-A- 19 703 261
- US-A- 3 802 130

## Beschreibung

Die Erfindung betrifft ein Feinbearbeitungswerkzeug, insbesondere Honrad, zum Bearbeiten von zahnradförmigen Werkstücken.

Ein solches Feinbearbeitungswerkzeug, das innen- oder außenverzahnt sein kann, weist eine Vielzahl nicht definierter Schneidkanten auf, die von einzelnen Schneidkömem gebildet werden. Diese Schneidkörner können entweder keramisch- oder kunstharzgebunden sein. Man spricht deshalb von Schneidkom in Keramikbindung oder Schneidkom in Kunststoffbindung. Es ist auch bereits bekannt (siehe EP 0 692 342 A2), Bruchstücke von keramisch gebundenen Schneidkörpem in ein Kunststoffmaterial einzubetten. Feinbearbeitungswerkzeuge mit Keramikbindung zeichnen sich durch eine gute Schnittleistung und Formstabilität aus, sie sind aber verhältnismäßig spröd und daher bruch- und schlagempfindlich.

Feinbearbeitungswerkzeuge mit Kunststoffbindung haben gegenüber solchen mit Keramikbindung den Vorteil einer größeren Elastizität, weshalb sie nicht so bruch- und schlagempfindlich sind. Diesem Vorteil steht aber eine erheblich geringere Schnittleistung gegenüber.

Der Erfindung liegt die Aufgabe zugrunde, ein Feinbearbeitungswerkzeug, insbesondere Honrad zu schaffen, das trotz hoher Schnittleistung eine ausreichende Elastizität aufweist.

Erfindungsgemäß ist ein diesem Erfordernis entsprechendes Feinbearbeitungswerkzeug, insbesondere Honrad gekennzeichnet durch einen axialen Schichtaufbau mit einer mittleren und zwei äußeren Schichten, die miteinander verbunden sind, wobei die mittlere Schicht aus einem Kunststoffmaterial besteht, in das Schneidkörner eingebettet sind, und die mit den beiden Randbereichen des Werkstücks in Eingriff gelangenden äußeren Schichten aus keramisch gebundenen Schneidkörnern bestehen.

Durch den erfindungsgemäßen Schichtaufbau eines Feinbearbeitungswerkzeugs werden die vorteilhaften Eigenschaften der Keramikbindung, nämlich Schnittkraft, Schnittleistung und Formstabilität mit denjenigen der Kunststoffbindung, nämlich Elastizität und Führungsfunktion nicht nur miteinander kombiniert, sondern sie unterstützen sich gegenseitig. Die Erfindung macht von der Erkenntnis Gebrauch, daß der erforderliche Materialabtrag im Randbereich des zu bearbeitenden Zahnrades wesentlich größer ist als im mittleren Bereich desselben, wie dies nachfolgend noch näher erläutert wird. Aus diesem Grund sind die Schichten mit hoher Schnittleistung in den äußeren Bereichen des erfindungsgemäßen Feinbearbeitungswerkzeugs angeordnet, während die Schicht mit geringerer Schnittleistung, aber erhöhter Elastizität und Führungsfunktion im mittleren Bereich angeordnet ist. Versuche haben ergeben, daß ein erfindungsgemäß aufgebautes Honrad gegenüber einem Honrad mit reiner Kunststoffbindung ein Vielfaches an Standzeit hat. Das erfindungsgemäße Feinbearbeitungswerkzeug ist zur Bearbeitung von Werkstücken mit großen Vorbearbeitungsabweichungen und aggressiven Flankenoberflächen besonders gut geeignet. Ebenso findet es Verwendung bei großen Materialabträgen und bei Werkstücken mit gratbehafteten Zahnflanken. Das erfindungsgemäße Werkzeug führt auch zu guten Ergebnissen, wenn die Bearbeitung des Werkstücks mit einem verhältnismäßig kleinen Achskreuzwinkel durchgeführt werden muß. Bei diesen Werkstücken sind die Schnittbedingungen erschwert und werden durch den Einsatz des Keramikmaterials verbessert.

Die stabilen Randbereiche mit hoher Formfestigkeit des Werkzeugs sind auch besonders vorteilhaft bei der Bearbeitung von Werkstücken, die eine Störkontur aufweisen. Wegen einer solchen Störkontur kann das Werkzeug nur geringfügig über das Werkstück hinausragen, so daß die Gefahr besteht, daß das Werkzeug in diesem Randbereich unter dem Anpreßdruck verformt wird.

Die Dicke der mittleren Schicht beträgt vorzugsweise 20 bis 90 % der Gesamtdicke des erfindungsgemäßen Feinbearbeitungswerkzeugs.

Vorzugsweise sind die beiden äußeren Schichten mit der mittleren Schicht verklebt.

Zur Steigerung der Schnittleistung können in die mittlere Schicht zusätzlich Bruchstücke von keramisch gebundenen Schneidkörpern eingebettet sein.

Ein Ausführungsbeispiel der Erfindung ist in den Zeichnungen dargestellt und wird im folgenden näher erläutert. Es zeigt:
Fig. 1 einen Axialschnitt durch einen Teilbereich eines Feinbearbeitungswerkzeugs,
Fig. 2 Variationen von Flankenliniendiagrammen innerhalb eines zu bearbeitenden zahnradförmigen Werkstücks,
Fig. 3 das Kollektiv aller Flanken am Umfang des Werkstücks,
Fig. 4 eine schematische Darstellung des Werkzeugs und des Werkstücks in der Tauchphase, und
Fig. 5 eine Darstellung ähnlich wie Fig. 4 am Ende der Tauchphase.

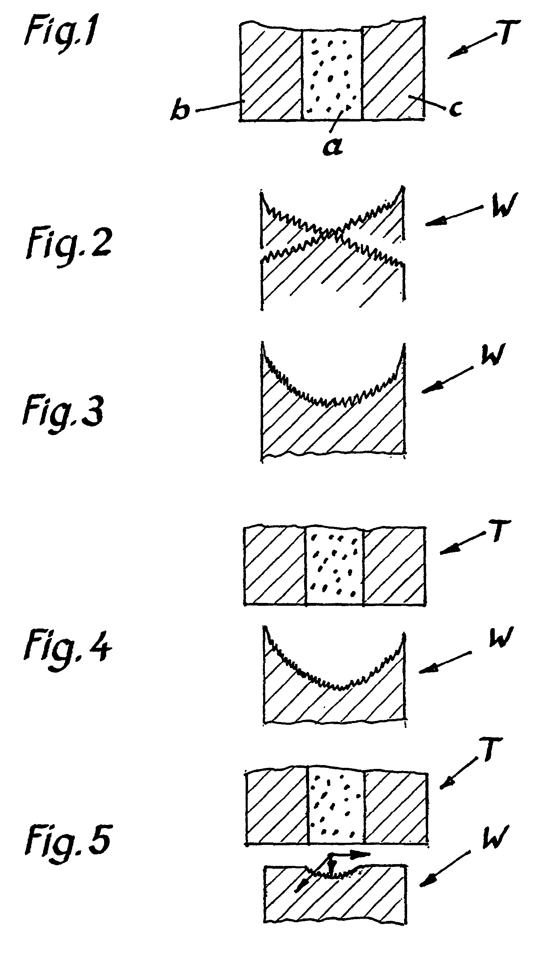

Das in Fig. 1 gezeigte Feinbearbeitungswerkzeug T, beispielsweise ein Honrad, hat einen axialen Schichtaufbau mit einer mittleren Schicht a und zwei äußeren Schichten b und c, die miteinander verklebt sind. Die mittlere Schicht a besteht aus einem Kunststoffmaterial, in das Schneidkömer eingebettet sind. Zusätzlich können Bruchstücke von keramisch gebundenen Schneidkörpem eingebettet sein. Die beiden äußeren Schichten b und c des Werkzeugs T bestehen aus einem Keramikmaterial. Bei dem gezeigten Ausführungsbeispiel haben die drei Schichten a, b und c die gleiche Dicke. Dies ist aber nicht unbedingt erforderlich. Die Dicke der mittleren Schicht a kann 20 bis 90 % der Gesamtdicke des Werkzeugs T betragen.

Wie aus dem Flankenliniendiagramm nach Fig. 2 hervorgeht, sind die Zahnflanken des zu bearbeitenden zahnradförmigen Werkstücks W nicht parallel, sondem zur Drehachse unterschiedlich geneigt. Die Hauptursache für diese Erscheinung besteht in einer Teilungs- und Rundlaufabweichung. Wenn die Bohrung des Werkstücks W zu dessen Stirnflächen nicht exakt rechtwinklig verläuft, dann führt das in die Bearbeitungsmaschine eingespannte Werkstück bei seiner Drehbewegung eine Taumelbewegung aus. Diese Taumelbewegung führt zu einer Neigung der Zahnflanken gegenüber der Drehachse, wobei die Höchstwerte der positiven und negativen Neigung der Zahnflanken in bezug auf die Drehbewegung um 180° gegeneinander versetzt sind. Außerdem können sich beim Härten des Werkstücks an den beiden Enden jedes Zahnes besonders harte Spitzen ausbilden, wie z. B. Restgrate. Ebenso sind die Randzonen der Zahnflanken häufig mit mechanischen Beschädigungen behaftet, die sich negativ auf die Werkzeugstandzeit auswirken.

In Fig. 3 ist das Kollektiv aller Flanken am Umfang des Werkstücks W gezeigt, es handelt sich gewissermaßen um die Hüllkurve aller Zahnflanken. Wie aus dieser Darstellung hervorgeht, muß in den Randbereichen des Werkstücks W wesentlich mehr Material abgetragen werden als im mittleren Bereich desselben.

Aus Gründen der besseren Veranschaulichung ist die unterschiedliche Neigung der Zahnflanken in Fig. 2 und die Krümmung der Hüllkurve in Fig. 3 stark übertrieben.

Gemäß Fig. 4 ist der schichtweise Aufbau des Werkzeugs T so gewählt, daß die beiden äußeren Schichten b und c bei der radialen Zustellung desselben mit den beiden Randbereichen des Werkstücks W in Eingriff gelangen. In der sogenannten Tauchphase, bei der lediglich eine radiale Zustellung des Werkzeugs T erfolgt, werden bevorzugt die beiden Randbereiche des Werkstücks W von den harten äußeren Schichten b und c des Werkzeugs T bearbeitet. Wenn die Tauchphase beendet ist, dann sind die Zahnflanken im wesentlichen gleichmäßig abgetragen, wie in Fig. 5 gezeigt. Jetzt kann sich eine Feinbearbeitung anschließen, bei der die elastischere mittlere Schicht a des Werkzeugs T den mittleren Bereich des Werkstücks W bearbeitet. In der Zeichnung sind die Bewegungen des Werkzeugs T mit Pfeilen angedeutet.

Bei der Bearbeitung eines Werkstücks W übemimmt die mittlere Schicht a des Feinbearbeitungswerkzeugs T überwiegend die Führungsfunktion, während die beiden äußeren Schichten b und c die wesentliche Schnittfunktion übemehmen. Das gezeigte Feinbearbeitungswerkzeug eignet sich insbesondere für Werkstücke mit schwieriger Bearbeitungsaufgabe, wie z. B. großer Abtrag, große Verzahnungsabweichungen, große Verzahnungsbreiten, taumelige Flankenlinien, kleiner Achskreuzwinkel γ, kleine Arbeitshübe und dergleichen.

## Patentansprüche

1. Feinbearbeitungswerkzeug, insbesondere Honrad, zum Bearbeiten von zahnradförmigen Werkstücken, **gekennzeichnet durch** einen axialen Schichtaufbau mit einer mittleren und zwei äußeren Schichten (a, b, c), die miteinander verbunden sind, wobei die mittlere Schicht (a) aus einem Kunststoffmaterial besteht, in das Schneidkörner eingebettet sind, und die mit den beiden Randbereichen des Werkstücks in Eingriff gelangenden äußeren Schichten (b und c) aus keramisch gebundenen Schneidkörnern bestehen.

2. Feinbearbeitungswerkzeug nach Anspruch 1, **dadurch gekennzeichnet, daß** die Dicke der mittleren Schicht (a) 20 bis 90 % der Gesamtdicke des Werkzeugs (T) beträgt.

3. Feinbearbeitungswerkzeug nach Anspruch 1 oder 2, **dadurch gekennzeichnet, daß** die beiden äußeren Schichten (b und c) mit der mittleren Schicht (a) verklebt sind.

4. Feinbearbeitungswerkzeug nach einem der Ansprüche 1 bis 3, **dadurch gekennzeichnet, daß** in die mittlere Schicht (a) zusätzlich Bruchstücke von keramisch gebundenen Schneidkörpern eingebettet sind.

## Claims

1. Precision machine tool, in particular a honing wheel, for finishing gear-shaped workpieces, **characterised in that** it has an axial layered structure with one middle and two outer layers (a, b, c) connected to each other, whereby the middle layer (a) comprises a plastics material in which cutting grains are embedded and the outer layers (b and c) coming into engagement with the two edge regions of the workpiece comprise ceramically bound cutting grains.

2. Precision machine tool according to Claim 1, **characterised in that** the thickness of the central layer (a) is between 20% and 90% of the total thickness of the tool (T).

3. Precision machine tool according to Claim 1 or 2, **characterised in that** the two outer layers (b and c) are cemented to the central layer (a).

4. Precision machine tool according to one of the Claims 1 to 3, **characterised in that** additional fragments of ceramically bound cutting bodies are embedded in the central layer (a).

## Revendications

1. Outil d'usinage de précision, notamment roue de pierrage, pour l'usinage de pièces sous forme de roues dentées, **caractérisé par** une structure stratifiée axiale avec une couche intermédiaire et deux couches extérieures (a, b, c) qui sont assemblées entre elles, la couche intermédiaire (a) étant constituée d'une matière plastique dans laquelle sont incorporés des grains coupants, et les couches extérieures (b et c), qui entrent en engagement avec les deux régions de bords de la pièce, étant constituées de grains coupants céramiquement liés.

2. Outil d'usinage de précision selon la revendication 1, **caractérisé en ce que** l'épaisseur de la couche intermédiaire (a) est comprise entre 20 et 90 % de l'épaisseur totale de l'outil (T).

3. Outil d'usinage de précision selon la revendication 1 ou 2, **caractérisé en ce que** les deux couches extérieures (b et c) sont assemblées par collage à la couche intermédiaire (a).

4. Outil d'usinage de précision selon l'une des revendications 1 à 3, **caractérisé en ce que** des fragments d'éléments coupants céramiquement liés sont en outre incorporés dans la couche intermédiaire (a).
